# EUROPEAN PATENT APPLICATION

(11) **EP 4 513 853 A1**
(43) Date of publication of application: **26.02.2025**
(21) Application number: 22938019.1
(22) Date of filing: 07.05.2022
(51) Int. Cl.: H04L 65/60

(54) **METHOD, APPARATUS AND SYSTEM FOR TRANSMITTING COMPOSITE PHOTOGRAPH DATA, AND ELECTRONIC DEVICE**

(30) Priority: 18.04.2022 CN 202210403529
(71) Applicant: Ugreen Group Limited, Shenzhen, Guangdong 518110 (CN)
(72) Inventor: ZHANG, Qingsen, Shenzhen, Guangdong 518110 (CN); CHEN, Junling, Shenzhen, Guangdong 518110 (CN); HUANG, Jiashu, Shenzhen, Guangdong 518110 (CN); YI, Qibang, Shenzhen, Guangdong 518110 (CN); CHEN, Weiming, Shenzhen, Guangdong 518110 (CN)
(74) Representative: Petraz, Gilberto Luigi
(86) International application number: PCT/CN2022/091375
(87) International publication number: WO 2023/201784

(57) **Abstract**

Disclosed in the present disclosure is a method, an apparatus, a system, a device, a storage medium, and a program product for transmitting composite photo data, the method including: responding to a first transmission request triggered by a first user; obtaining target composite photo data directed by the first transmission request, in which the target composite photo data includes at least one piece of first photo data and at least one piece of first video data corresponding to the first photo data; compressing and processing the target composite photo data according to the first photo data to obtain first compressed data having an identical data facade to that of the first photo data; and transmitting the first compressed data to a first terminal position corresponding to the first transmission request. It is evident that the present disclosure allows the user to transmit the composite photo data in such a way that the user may always maintain a subjective perception of the photo data, effectively reducing the user's misoperation and improving the user's experience.

## Description

### Field

The present disclosure relates to the technical field of data transmission and, particularly, to a method, an apparatus, a system, a device, a storage medium, and a program product for transmitting composite photo data.

### Background

With the development of photographic technology, an increasing number of companies began to develop more novel photo technology to win the favor of consumers. Composite photo technology is one of such technologies, which produces a composite photo data that includes both photo data and a video data before and after the time point at which the photo data was taken, for example, the live photos in iPhones. A similar photo technology has also been introduced in Samsung's Galaxy S7 or Camera MX software.

However, when transmitting such composite photo data, such as when backing it up to the cloud, due to the complexity of the data content and the necessity to keep the consistency of a variety of data during transmission, it is common to package it into a compressed format for transmission in the existing data transmission technology, e.g., the iPhone packages it into the LIVP format. However, such compressed formats are typically not recognizable by the system and likewise are not directly recognizable by the user.

With the existing method, it is not possible to perceive which photo data is the currently transmitted compressed data during data transmission, so the use experience is inferior, and it is easy to misoperate due to incorrect recognition of the data. It is evident that the prior art is flawed and urgent to be solved.

### Summary

Provided in the present disclosure is a method, an apparatus, a system, a device, a storage medium, and a program product for transmitting composite photo data, which allows the user to transmit the composite photo data in such a way that the user may always maintain a subjective perception of the photo data, effectively reducing the user's misoperation and improving the user's experience.

To solve the aforementioned technical problem, disclosed in a first aspect of the present disclosure is a method for transmitting composite photo data, the method including:
responding to a first transmission request triggered by a first user; obtaining target composite photo data directed by the first transmission request, in which the target composite photo data includes at least one piece of first photo data and at least one piece of first video data corresponding to the first photo data;
compressing and processing the target composite photo data according to the first photo data to obtain first compressed data having an identical data facade to that of the first photo data; and
transmitting the first compressed data to a first terminal position corresponding to the first transmission request.

As an optional implementation, in the first aspect of the present disclosure, compressing and processing the target composite photo data according to the first photo data to obtain the first compressed data having an identical data facade to that of the first photo data includes:
obtaining a first data title and a first data suffix of the first photo data;
compressing the target composite photo data to obtain the first compressed data;
identifying a data title of the first compressed data to be the first data title; and
identifying a data suffix of the first compressed data to be the first data suffix.

As an optional implementation, in the first aspect of the present disclosure, the method further includes:
obtaining first pending determination data transmitted by a second user at the first terminal position, the first pending determination data having an identical data facade to that of the first compressed data;
determining whether the first pending determination data is the first compressed data to obtain a first determination result; and
decompressing and saving the first pending determination data if the first determination result is yes.

As an optional implementation, in the first aspect of the present disclosure, decompressing and saving the first pending determination data includes:
decompressing the first pending determination data to obtain at least one piece of second photo data and at least one piece of second video data corresponding to the second photo data;
establishing a data correspondence between the second photo data and the second video data; and
saving the second photo data and the second video data, respectively.

As an optional implementation, in the first aspect of the present disclosure, the method further includes:
responding to a second transmission request triggered by a third user; obtaining at least one piece of third photo data and at least one piece of third video data corresponding to the third photo data;
determining whether the third user is qualified with a device for processing the composite photo data to obtain a second determination result; and
transmitting the third photo data and/or the third video data to a second terminal position corresponding to the second transmission request, according to the second determination result.

As an optional implementation, in the first aspect of the present disclosure, transmitting the third photo data and/or the third video data to a second terminal position corresponding to the second transmission request, according to the second determination result includes:
compressing and processing the third photo data and the third video data to obtain second compressed data if the second determination result is yes, and transmitting the second compressed data to the second terminal position corresponding to the second transmission request, the second compressed data having an identical data facade to that of the third photo data; and
transmitting the third photo data to the second terminal position if the second determination result is no.

As an optional implementation, in the first aspect of the present disclosure, the method further includes:
obtaining second pending determination data at the second terminal position, the second pending determination data having an identical data facade to that of the second compressed data;
determining whether the second pending determination data is the second compressed data to obtain a third determination result; and
decompressing and saving the second pending determination data if the third determination result is yes.

As an optional implementation, in the first aspect of the present disclosure, the data facade includes at least one of a data title, a data thumbnail, a data suffix, and a data identification.

Disclosed in a second aspect of the present disclosure is an apparatus for transmitting composite photo data, the apparatus including:
a data-obtaining module, used for responding to a first transmission request triggered by a first user; obtaining target composite photo data directed by the first transmission request, in which the target composite photo data includes at least one piece of first photo data and at least one piece of first video data corresponding to the first photo data;
a compressing-processing module, used for compressing and processing the target composite photo data according to the first photo data to obtain first compressed data having an identical data facade to that of the first photo data; and
a data-transmitting module, used for transmitting the first compressed data to a first terminal position corresponding to the first transmission request.

As an optional implementation, in the second aspect of the present disclosure, specific methods of the compressing-processing module in compressing and processing the target composite photo data according to the first photo data to obtain the first compressed data having an identical data facade to that of the first photo data include:
obtaining a first data title and a first data suffix of the first photo data;
compressing the target composite photo data to obtain the first compressed data;
identifying a data title of the first compressed data to be the first data title; and
identifying a data suffix of the first compressed data to be the first data suffix.

As an optional implementation, in the second aspect of the present disclosure, the apparatus further includes a data-saving module for performing following steps:
obtaining first pending determination data transmitted by a second user at the first terminal position, the first pending determination data having an identical data facade to that of the first compressed data;
determining whether the first pending determination data is the first compressed data to obtain a first determination result; and
decompressing and saving the first pending determination data if the first determination result is yes.

As an optional implementation, in the second aspect of the present disclosure, specific methods of the data-saving module in decompressing and saving the first pending determination data include:
decompressing the first pending determination data to obtain at least one piece of second photo data and at least one piece of second video data corresponding to the second photo data;
establishing a data correspondence between the second photo data and the second video data; and
saving the second photo data and the second video data, respectively.

As an optional implementation, in the second aspect of the present disclosure, the apparatus further includes a determining-transmitting module for performing following steps:
responding to a second transmission request triggered by a third user; obtaining at least one piece of third photo data and at least one piece of third video data corresponding to the third photo data;
determining whether the third user is qualified with a device for processing the composite photo data to obtain a second determination result; and
transmitting the third photo data and/or the third video data to a second terminal position corresponding to the second transmission request, according to the second determination result.

As an optional implementation, in the second aspect of the present disclosure, specific methods of the determining-transmitting module in transmitting the third photo data and/or the third video data to a second terminal position corresponding to the second transmission request, according to the second determination result include:
compressing and processing the third photo data and the third video data to obtain second compressed data if the second determination result is yes, and transmitting the second compressed data to the second terminal position corresponding to the second transmission request, the second compressed data having an identical data facade to that of the third photo data; and
transmitting the third photo data to the second terminal position if the second determination result is no.

As an optional implementation, in the second aspect of the present disclosure, the apparatus further includes a determining-saving module for performing following steps:
obtaining second pending determination data at the second terminal position, the second pending determination data having an identical data facade to that of the second compressed data;
determining whether the second pending determination data is the second compressed data to obtain a third determination result; and
decompressing and saving the second pending determination data if the third determination result is yes.

As an optional implementation, in the second aspect of the present disclosure, the data facade includes at least one of a data title, a data thumbnail, a data suffix, and a data identification.

Disclosed in a third aspect of the present disclosure is a system for transmitting composite photo data, the system including a first terminal, a second terminal, and an apparatus for transmitting composite photo data disclosed in the second aspect of the present disclosure.

Disclosed in a fourth aspect of the present disclosure is an electronic device, including:
a memory, memorized with an executable code; and
a processor, coupled with the memory,
in which the processor invokes the executable code memorized in the memory to perform some or all steps in the method for transmitting composite photo data, disclosed in the first aspect of the present disclosure.

Disclosed in a fifth aspect of the present disclosure is a computer memory medium including computer instructions, in which the computer instructions are invoked to perform some or all steps in the method for transmitting composite photo data, disclosed in the first aspect of the present disclosure.

Disclosed in a sixth aspect of the present disclosure is a computer program product, including computer program or instructions, in which the computer program or instructions is performed by a processor to implement some or all steps in the method for transmitting composite photo data, disclosed in the first aspect of the present disclosure.

Compared to the prior art, the present disclosure provides beneficial effects as follows.

In the present disclosure, the composite photo data may be compressed to modify the data facade to be identical to that of the photo data, and then the data may be transmitted, which allows the user to transmit the composite photo data in such a way that the user may always maintain a subjective perception of the photo data, effectively reducing the user's misoperation and improving the user's experience.

### Brief description of the drawings

In order to illustrate the technical solutions of the embodiments of the present disclosure more clearly, the following drawings are briefly described as required in the context of the embodiments. Obviously, the following drawings illustrate only some of the embodiments of the present disclosure. Other relevant drawings may be obtained on the basis of these drawings without any creative effort by those skilled in the art.
Fig. 1 is a schematic flow diagram of a method for transmitting composite photo data disclosed in an embodiment of the present disclosure;
Fig. 2 is a schematic flow diagram of another method for transmitting composite photo data disclosed in an embodiment of the present disclosure;
Fig. 3 is a schematic flow diagram of a further method for transmitting composite photo data disclosed in an embodiment of the present disclosure;
Fig. 4 is a schematic flow diagram of a further method for transmitting composite photo data disclosed in an embodiment of the present disclosure;
Fig. 5 is a schematic structural diagram of an apparatus for transmitting composite photo data disclosed in an embodiment of the present disclosure;
Fig. 6 is a schematic structural diagram of an electronic device disclosed in an embodiment of the present disclosure.

### Detailed description of the embodiments

For a better understanding of the solutions of the present disclosure by those skilled in the art, the technical solutions in the examples of the present disclosure are clearly and completely described and discussed below in conjunction with the attached drawings in the embodiments of the present disclosure. Obviously, the embodiments described herein are only some of the embodiments of the present disclosure but not all of them. Based on the embodiments in the present disclosure, all other embodiments obtained by those skilled in the art without creative efforts fall within the scope of protection of the present disclosure.

The terms "first", "second", and the like in the specification, the claims and the above-mentioned drawings of the present disclosure are used to identify different objects and are not intended to describe a particular sequence. In addition, the terms "comprise" and "include", and any derivatives and conjugations thereof, are intended to cover non-exclusive inclusion. For example, a process, method, apparatus, product, or device that includes a series of steps or units is not limited to the listed steps or units, but optionally also includes steps or units that are not listed, or optionally also includes other steps or units that are inherent to those processes, methods, products, or devices.

The term "embodiment" herein means that a particular feature, structure or characteristic described in conjunction with an embodiment may be included in at least one embodiment of the present disclosure. The presence of the term in various places in the specification does not necessarily indicate the same embodiment, nor is it a separate or alternative embodiment that is mutually exclusive with other embodiments. It is understood, both explicitly and implicitly, by those skilled in the art that the embodiments described herein may be combined with other embodiments.

Disclosed in the present disclosure is a method, an apparatus, a system, a device, a storage medium, and a program product for transmitting composite photo data, in which the composite photo data may be compressed to modify the data facade to be identical to that of the photo data, and then the data may be transmitted, which allows the user to transmit the composite photo data in such a way that the user may always maintain a subjective perception of the photo data, effectively reducing the user's misoperation and improving the user's experience. Detailed descriptions are provided respectively as follows.

### Embodiment 1

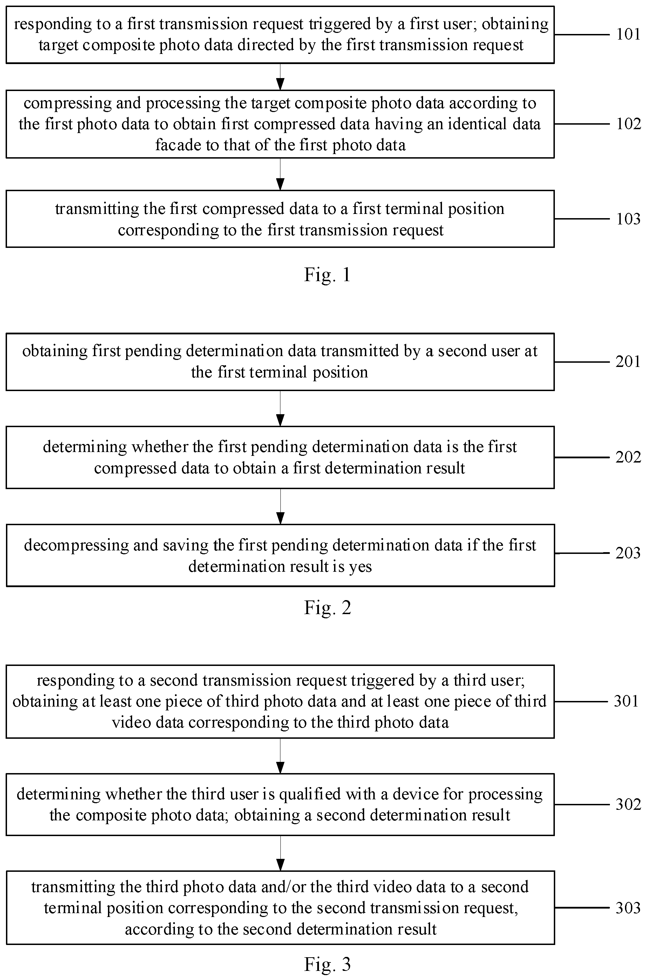

Please refer to Fig. 1, Fig. 1 is a schematic flow diagram of a method for transmitting composite photo data disclosed in the present embodiment of the disclosure. The method described in Fig. 1 may be applied in a corresponding apparatus for transmitting composite photo data, such as a transmission terminal, a transmission device, or a transmission server being either a cloud-based server or a local server, which is not limited in the embodiment of the present disclosure.

Preferably, the method of the present embodiment of the disclosure may be applied to a user terminal, such as a computer, a mobile phone, or other device terminal that stores the composite photo data, and executed by the user terminal to achieve the transmission of the composite photo data, such as backing up the composite photo to a server in the cloud.

Specifically, as shown in Fig. 1, the method for transmitting composite photo data may include the following steps:

In step 101, responding to a first transmission request triggered by a first user; obtaining target composite photo data directed by the first transmission request.

Specifically, in the present disclosure, the target composite photo data includes at least one piece of first photo data and at least one piece of first video data corresponding to the first photo data. Optionally, the first video data are video data including the first photo data. For example, there may be particularly at least one frame of image being the first photo data in the first video data. In some optional embodiments, a video frame in the first video data corresponding to the first photo data is at a position of a middle frame. For example, the photographing period corresponding to the first video data may be a preset period before and after a time point at which the first photo data is taken. In the prior art, composite photo data, such as a live photo, generally includes a photo data and a video data in the relationship described above, but it should be noted that other composite photo data types that conform to the data content described in the present disclosure should also be included within the protection scope of the present disclosure.

Optionally, the first transmission request may be triggered by the first user via a human-computer interaction device such as a keyboard, a mouse, or a touch screen, for example, it may be triggered via a touch screen of a cell phone terminal. Optionally, the first transmission request may indicate a first terminal position to be transmitted and a storage position of the target composite photo data, so that the executing subject of the present method may obtain the target composite photo data directly from the storage position.

In step 102, compressing and processing the target composite photo data according to the first photo data to obtain first compressed data having an identical data facade to that of the first photo data.

Optionally, in the present disclosure, the data facade may include at least one of a data title, a data thumbnail, a data suffix, and a data identification. Optionally, the data title may be, for example, a file name of a data file. Optionally, the data thumbnail may be a file icon of a data file or a thumbnail display image of a data file in a particular program. Optionally, the data suffix may be used to indicate a suffix of a data file format. For example, ".txt" is used to indicate data in text format and ".jpg" is used to indicate data in image format. Optionally, the data identification may be an identification carried by data that identifies data content thereof, e.g., the data content of a specific data bit.

Optionally, the compression of the target composite photo data may be performed using a data compression algorithm for compression, or may be performed using existing compression software such as ZIP or RAR.

By this step, the compressed target composite photo data has an identical data facade to the first photo data. As the user generally only has perception recognition ability for the photo data in the composite photo data when photographing, this step enables the user to directly recognize that the first compressed data to be transmitted at the moment is the data corresponding to the first photo data, so that the user perceives which photo data is the compressed data currently transmitted during subsequent data transmission, which may not lead to misoperation due to incorrectly recognition of the data, and provides a good user experience.

In step 103, transmitting the first compressed data to a first terminal position corresponding to the first transmission request.

Optionally, the first terminal position may be a position of a device other than the device in which the executing subject of the present method is positioned, such as a network address of a Network Attached Storage (NAS) server, so that a kind of inter-device data transmission may be achieved. Optionally, the first terminal position may also be a storage position other than the storage position of the target composite photo data in the device in which the executing subject of the present method is positioned, so that a kind of intra-device data transmission may be achieved, which is not limited in the present disclosure.

It is evident that, by implementing the method described in the present embodiment of the disclosure, the composite photo data may be compressed to modify the data facade to be identical to that of the photo data, and then the data may be transmitted, which allows the user to transmit the composite photo data in such a way that the user may always maintain a subjective perception of the photo data, effectively reducing the user's misoperation and improving the user's experience.

As an optional embodiment, in the aforementioned step 102, compressing and processing the target composite photo data according to the first photo data to obtain first compressed data having an identical data facade to that of the first photo data includes:
obtaining a first data title and a first data suffix of the first photo data;
compressing the target composite photo data to obtain the first compressed data;
identifying a data title of the first compressed data to be the first data title; and
identifying a data suffix of the first compressed data to be the first data suffix.

Optionally, other data facade of the first compressed data, such as a data thumbnail or data identification, may also be modified to render the data facade of the first compressed data to be identical to that of the first photo data.

It is evident that, by implementing the present optional embodiment, it may compress the composite photo data to modify the data title and the data suffix to be identical to that of the photo data, and then the data may be transmitted, which allows the user to transmit the composite photo data in such a way that the user may maintain a subjective perception of the photo data more explicitly, effectively reducing the user's misoperation and improving the user's experience.

### Embodiment 2

Please refer to Fig. 2, Fig. 2 is a schematic flow diagram of another method for transmitting composite photo data disclosed in the present embodiment of the disclosure. The method described in Fig. 2 may be applied in a corresponding apparatus for transmitting composite photo data, such as a transmission terminal, a transmission device, or a transmission server being either a cloud-based server or a local server, which is not limited in the embodiment of the present disclosure. Preferably, the method of the present embodiment of the disclosure may be applied to a server terminal receiving the composite photo data uploaded for backup by the user, such as a local server or a cloud server corresponding to the first terminal position described in embodiment 1, so as to achieve the online backup of the composite photo data. Optionally, the method for transmitting data in the present embodiment of the disclosure may be performed in conjunction with the method for transmitting data in the embodiment 1, or may be performed independently, which is not limited by the present disclosure.

Specifically, as shown in Fig. 2, the method for transmitting composite photo data may include the following steps:

In step 201, obtaining first pending determination data transmitted by a second user at the first terminal position.

Specifically, the first pending determination data has an identical data facade to that of the first compressed data. Optionally, the data facade of the first pending determination data may be photo data. Please refer to the description in Embodiment 1 for an elaboration on the data facade.

Optionally, the first pending determination data may be sent to the first terminal position by a user terminal corresponding to the second user by implementing the steps in embodiment 1. Optionally, the first compressed data may be obtained by the user terminal corresponding to the second user after compressing and processing the composite photo data corresponding to the second user by implementing the steps in embodiment 1. For the elaboration on the composite photo data, please refer to the description of the target composite photo data in embodiment 1.

In step 202, determining whether the first pending determination data is the first compressed data to obtain a first determination result.

In the present step, as the data facade of the first pending determination data is identical to that of the first compressed data, rendering it unclear to the executing subject of the present embodiment whether the obtained data is compressed composite photo data or normal photo data, it is necessary to perform a determination action in order to identify a subsequent processing step.

Optionally, the method of determining whether the first pending determination data is the first compressed data may be determined directly by the identification information attached to the first pending determination data during transmission, e.g., the user terminal corresponding to the second user may transmit a parameter used to indicate the data content thereof as the identification information when the first pending determination data is sent. Optionally, the determination may also be made by analyzing the data content of the first pending determination data. For example, the determination may be made by reading the header information of the data file of the first pending determination data, such as reading the first 3 bytes of the data file of the first pending determination data and determining whether the first 3 bytes are 504B03. If so, it is determined that the first pending determination data is a compressed file, i.e., it is the first compressed data.

In step 203, decompressing and saving the first pending determination data if the first determination result is yes.

Optionally, if the first determination result is no, the first pending determination data may be directly saved, since it is the data file whose data facade is displayed at the moment, and it is not the case that the data facade has been modified.

It is evident that, by implementing the method described in the present embodiment of the disclosure, on the one hand, the composite photo data may be compressed to modify the data facade to be identical to that of the photo data, and then the data may be transmitted, which allows the user to transmit the composite photo data in such a way that the user may always maintain a subjective perception of the photo data, effectively reducing the user's misoperation and improving the user's experience. On the other hand, it is capable of determining whether the obtained data is compressed and modified composite photo data, and decompressing and saving the data if it is, thereby enabling the entire process of data transmission to be completed, and the decompressed and saved data may be used for further data recovery or data processing.

As an optional embodiment, in the aforementioned step 203, decompressing and saving the first pending determination data includes:
decompressing the first pending determination data to obtain at least one piece of second photo data and at least one piece of second video data corresponding to the second photo data;
establishing a data correspondence between the second photo data and the second video data; and
saving the second photo data and the second video data, respectively.

Optionally, the data correspondence between the second photo data and the second video data may be achieved by establishing a data correspondence table or modifying the data facade of both. For more technical details of the second photo data and the second video data, reference may be made to the description of the first photo data and the first video data in embodiment 1, which is not repeated herein.

Optionally, the second photo data and the second video data are saved separately, and the second photo data may be saved in a storage space visible to the second user for receiving operational information directed by the second user, and the second video data may be saved in a storage space in a storage position different from that of the second photo data for categorizing them.

Optionally, the method further includes:
responding to a viewing request of the second user; identifying the second photo data;
transmitting the second photo data to a user terminal corresponding to the second user for viewing.

In the above step, the viewing request of the second user may be responded to, and the second photo data saved in the storage space visible to the second user is sent to the user terminal corresponding to the second user, so that the second user, either in the process of transmitting the first pending determination data (the first compressed data) or in the process of subsequently checking the saving of the data, simply views the uniform data with the photo data as the data facade, which allows the user to always maintain a subjective perception of the photo data, effectively reducing the user's misoperation and improving the user's experience.

It is evident that, by implementing the present optional embodiment, it is capable of decompressing the first pending determination data after determining that the first pending determination data is compressed composite photo data, and establishing a correspondence between the video data and the photo data, thereby allowing the entire process of data transmission to be completed, and the data after the correspondence is established allows for further data recovery or data processing operations to be performed more efficiently.

### Embodiment 3

Please refer to Fig. 3, Fig. 3 is a schematic flow diagram of a further method for transmitting composite photo data disclosed in the present embodiment of the disclosure. The method described in Fig. 3 may be applied in a corresponding apparatus for transmitting composite photo data, such as a transmission terminal, a transmission device, or a transmission server being either a cloud-based server or a local server, which is not limited in the embodiment of the present disclosure. Preferably, the method of the present embodiment of the disclosure may be applied to a server terminal storing the composite photo data uploaded for backup by the user, such as a local server or a cloud server corresponding to the first terminal position described in embodiment 1, so as to achieve transmission of the composite photo data to a user terminal, for example, to achieve a restore-to-local operation of the composite photo data. Optionally, the method for transmitting data in the present embodiment of the disclosure may be performed in conjunction with the method for transmitting data in the embodiment 1 and/or embodiment 2, or may be performed independently, which is not limited by the present disclosure.

Specifically, as shown in Fig. 3, the method for transmitting composite photo data may include the following steps:
In step 301, responding to a second transmission request triggered by a third user; obtaining at least one piece of third photo data and at least one piece of third video data corresponding to the third photo data.

Optionally, the second transmission request may be triggered by the third user via a human-computer interaction device of the corresponding user terminal such as a keyboard, a mouse, or a touch screen, for example, it may be triggered via a touch screen of a cell phone terminal. Optionally, the second transmission request may indicate the position of the second terminal to be transmitted and the storage position of the composite photo data at the executing subject of the present embodiment, so that the executing subject of the present method may obtain the composite photo data, i.e., at least one piece of the third photo data and at least one piece of the third video data corresponding to the third photo data, directly from the storage position. For the elaboration on the composite photo data, please refer to the description of the target composite photo data in embodiment 1.

Optionally, the at least one piece of third photo data and the at least one piece of third video data corresponding to the third photo data may be sent by the user terminal corresponding to the third user to the executing subject of the present embodiment by implementing the steps in embodiment 1, and saved by the executing subject of the present embodiment by implementing the steps in embodiment 2. For more technical details of the third photo data and the third video data, reference may be made to the description of the first photo data and the first video data in embodiment 1, which is not repeated herein.

In step 302, determining whether the third user is qualified with a device for processing the composite photo data; obtaining a second determination result.

Optionally, determining whether the third user is qualified with device for processing the composite photo data may include:
obtaining terminal device information of a user terminal corresponding to the third user;
determining whether the third user is qualified with a device for processing the composite photo data according to the terminal device information.

The terminal device information includes at least one of installed software information, performance information, and historical data processing records of the user terminal. Optionally, determining whether a software that processes composite photo data is installed in the user terminal according to the installed software information of the user terminal, and confirming that the third user is qualified with a device for processing the composite photo data, if a determination result is yes. Optionally, determining whether the performance information of the user terminal is better than a preset performance threshold, and confirming that the third user is qualified with a device for processing the composite photo data, if a determination result is yes. Optionally, determining whether a record of processing composite photo data is present or whether a record of failing to process composite photo data is absent in the historical data processing record of the user terminal, and confirming that the third user is qualified with a device for processing the composite photo data, if a determination result is yes.

In step 303, transmitting the third photo data and/or the third video data to a second terminal position corresponding to the second transmission request, according to the second determination result.

Optionally, the second terminal position corresponding to the second transmission request may be used to indicate a user terminal corresponding to the third user, thereby achieving inter-device data transmission, and it may also be used to indicate a device storage position in the executing subject of the present embodiment, thereby achieving intra-device data transmission.

It is evident that, by implementing the method described in the present embodiment of the disclosure, it is capable of determining whether the user is qualified to process the composite photo data to identify the data transmission method, thereby allowing the data to be transmitted flexibly according to the performance of the user's device in a data transmission scenario, such as data recovery, and improving the user's experience.

As an optional embodiment, in aforementioned step 303, transmitting the third photo data and/or the third video data to a second terminal position corresponding to the second transmission request, according to the second determination result includes:
compressing and processing the third photo data and the third video data to obtain second compressed data if the second determination result is yes, and transmitting the second compressed data to the second terminal position corresponding to the second transmission request;
transmitting the third photo data to the second terminal position if the second determination result is no.

The second compressed data has an identical data facade to that of the third photo data. Optionally, the steps of compressing and processing the third photo data and the third video data may refer to the steps of compressing and processing the first photo data and the first video data in embodiment 1, which are not repeated herein.

By this step, if the user is not qualified to process the composite photo data, the photo data is sent directly to the user for viewing, while if the user is qualified to do so, the composite photo data is compressed. The compressed composite photo data has an identical data facade to the third photo data. As the user generally only has perception recognition ability for the photo data in the composite photo data when photographing, this step enables the user to directly recognize that the second compressed data to be transmitted at the moment is the data corresponding to the third photo data, so that the user perceives which photo data is the compressed data currently transmitted during subsequent data transmission, which may not lead to misoperation due to incorrectly recognition of the data, and provides a good user experience.

By implementing the present optional embodiment, it allows data processing to be performed flexibly according to the user's device and, when the user is qualified to do so, the composite photo data may be compressed to modify the data facade to be identical to that of the photo data, and then the data may be transmitted, which allows the user to transmit the composite photo data in such a way that the user may always maintain a subjective perception of the photo data, effectively reducing the user's misoperation and improving the user's experience.

### Embodiment 4

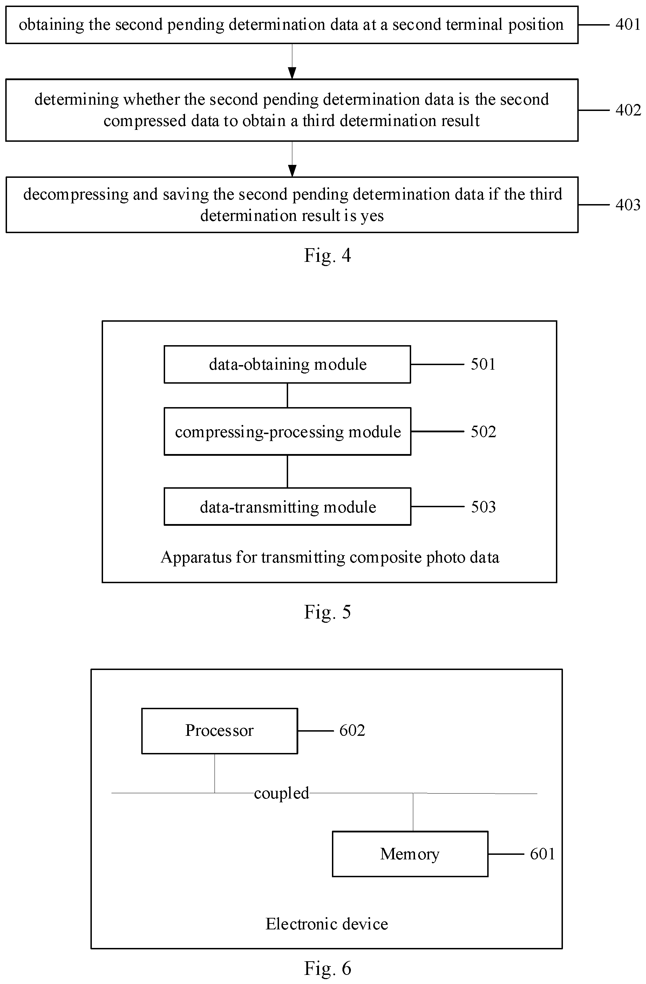

Please refer to Fig. 4, Fig. 4 is a schematic flow diagram of a further method for transmitting composite photo data disclosed in the present embodiment of the disclosure. The method described in Fig. 4 may be applied in a corresponding apparatus for transmitting composite photo data, such as a transmission terminal, a transmission device, or a transmission server being either a cloud-based server or a local server, which is not limited in the embodiment of the present disclosure. Preferably, the method of the present embodiment of the disclosure may be applied to a user terminal that intends to recover data from a server terminal storing composite photo data uploaded and backed up by a user to a local user terminal, such as a user terminal corresponding to the second terminal position described in embodiment 3, so as to achieve the recovery of the composite photo data to the user terminal. Optionally, the method for transmitting data in the present embodiment of the disclosure may be performed in conjunction with the method for transmitting data in at least one of the aforementioned embodiments, or may be performed independently, which is not limited by the present disclosure.

Specifically, as shown in Fig. 4, the method for transmitting composite photo data may include the following steps:
In step 401, obtaining the second pending determination data at a second terminal position.

Specifically, the second pending determination data has an identical data facade to that of the second compressed data. Optionally, the second pending determination data may be sent by the server terminal to the second terminal position of the executing subject of the present embodiment. Optionally, the data facade of the second pending determination data may be a data facade of the photo data. For technical details regarding the data facade, reference may be made to the description in embodiment 1.

Optionally, the second compressed data may be the compressed and processed composite photo data obtained by the server terminal according to the steps in embodiment 3.

In step 402, determining whether the second pending determination data is the second compressed data to obtain a third determination result.

In the present step, as the data facade of the second pending determination data is identical to that of the second compressed data, rendering it unclear to the executing subject of the present embodiment whether the obtained data is compressed composite photo data or normal photo data, it is necessary to perform a determination action in order to identify a subsequent processing step.

Optionally, the method of determining whether the second determination determination data is the second compressed data may refer to the description of the method of determining whether the first pending determination data is the first compressed data in embodiment 2, which is not repeated herein.

In step 403, decompressing and saving the second pending determination data if the third determination result is yes.

Optionally, if the third determination result is no, the second pending determination data may be directly saved, since it is the data file whose data facade is displayed at the moment, and it is not the case that the data facade has been modified.

Optionally, the method of decompressing and saving the second pending determination data may refer to the description of the method of decompressing and saving the first pending determination data in embodiment 2, which is not repeated herein.

It is evident that, by implementing the method described in the present embodiment of the disclosure, on the one hand, the composite photo data may be compressed to modify the data facade to be identical to that of the photo data, and then the data may be transmitted, which allows the user to transmit the composite photo data in such a way that the user may always maintain a subjective perception of the photo data, effectively reducing the user's misoperation and improving the user's experience. On the other hand, it is capable of determining whether the obtained data is compressed and modified composite photo data, and decompressing and saving the data if it is, thereby enabling the entire process of data transmission to be completed, and the decompressed and saved data may be used for further data recovery or data processing.

### Embodiment 5

Please refer to Fig. 5, Fig. 5 is a schematic structural diagram of an apparatus for transmitting composite photo data disclosed in the present embodiment of the disclosure. The apparatus described in Fig. 5 may be applied to a corresponding apparatus for processing data, such as a transmission terminal, a transmission device, or a transmission server being either a cloud-based server or a local server. As shown in Fig. 5, the apparatus may include:
A data-obtaining module 501 is used for responding to a first transmission request triggered by a first user and obtaining target composite photo data directed by the first transmission request.

Optionally, the first transmission request may be triggered by the first user via a human-computer interaction device such as a keyboard, a mouse, or a touch screen, for example, it may be triggered via a touch screen of a cell phone terminal. Optionally, the first transmission request may indicate a first terminal position to be transmitted and a storage position of the target composite photo data, so that the data-obtaining module 501 may obtain the target composite photo data directly from the storage position.

A compressing-processing module 502 is used for compressing and processing the target composite photo data according to the first photo data to obtain first compressed data having an identical data facade to that of the first photo data.

Optionally, in the present disclosure, the data facade may include at least one of a data title, a data thumbnail, a data suffix, and a data identification. Optionally, the data title may be, for example, a file name of a data file. Optionally, the data thumbnail may be a file icon of a data file or a thumbnail display image of a data file in a particular program. Optionally, the data suffix may be used to indicate a suffix of the data file format. For example, ".txt" is used to indicate data in text format and ".jpg" is used to indicate data in image format. Optionally, the data identification may be an identification carried by data that identifies data content thereof, e.g., the data content of a specific data bit.

Optionally, the compression of the target composite photo data may be performed using a data compression algorithm for compression, or may be performed using existing compression software such as ZIP or RAR.

By means of the compressing-processing module 502, the compressed target composite photo data has an identical data facade to the first photo data. As the user generally only has perception recognition ability for the photo data in the composite photo data when photographing, this step enables the user to directly recognize that the first compressed data to be transmitted at the moment is the data corresponding to the first photo data, so that the user perceives which photo data is the compressed data currently transmitted during subsequent data transmission, which may not lead to misoperation due to incorrectly recognition of the data, and provides a good user experience.

A data-transmitting module 503 is used for transmitting the first compressed data to a first terminal position corresponding to the first transmission request.

Optionally, the first terminal position may be a position of a device other than the device in which the present transmission apparatus is positioned, such as a network address of a Network Attached Storage (NAS) server, so that a kind of inter-device data transmission may be achieved. Optionally, the first terminal position may also be a storage position other than the storage position of the target composite photo data in the device in which the present transmission apparatus is positioned, so that a kind of intra-device data transmission may be achieved, which is not limited in the present disclosure.

It is evident that, by implementing the transmitting apparatus described in the present embodiment of the disclosure, the composite photo data may be compressed to modify the data facade to be identical to the photo data therein, and then the data may be transmitted, which allows the user to transmit the composite photo data in such a way that the user may always maintain a subjective perception of the photo data, effectively reducing the user's misoperation and improving the user's experience.

As an optional embodiment, specific methods of the compressing-processing module 502 in compressing and processing the target composite photo data according to the first photo data to obtain the first compressed data having an identical data facade to that of the first photo data include:
obtaining a first data title and a first data suffix of the first photo data;
compressing the target composite photo data to obtain the first compressed data;
identifying a data title of the first compressed data to be the first data title; and
identifying a data suffix of the first compressed data to be the first data suffix.

Optionally, other data facade of the first compressed data, such as data thumbnails or data identifiers, may also be modified to render the data facade of the first compressed data to be identical to the first photo data.

It is evident that, by implementing the present optional embodiment, it may compress the composite photo data to modify the data title and the data suffix to be identical to the photo data therein, and then the data may be transmitted, which allows the user to transmit the composite photo data in such a way that the user may maintain a subjective perception of the photo data more explicitly, effectively reducing the user's misoperation and improving the user's experience.

As an optional embodiment, the apparatus further includes a data-saving module for performing following steps:
obtaining first pending determination data transmitted by a second user at the first terminal position, the first pending determination data having an identical data facade to that of the first compressed data;
determining whether the first pending determination data is the first compressed data to obtain a first determination result; and
decompressing and saving the first pending determination data if the first determination result is yes.

Specifically, the first pending determination data has an identical data facade to that of the first compressed data. Optionally, the data facade of the first pending determination data may be photo data.

In the present step, as the data facade of the first pending determination data is identical to that of the first compressed data, rendering it unclear to the executing subject of the present embodiment whether the received data is compressed composite photo data or normal photo data, it is necessary to perform a determination action in order to identify a subsequent processing step.

In the present optional embodiment, as the data facade of the first pending determination data is identical to that of the first compressed data, rendering it unclear to the data-saving module whether the received data is compressed composite photo data or normal photo data, it is necessary to perform a determination action in order to identify a subsequent processing step.

Optionally, the method of determining whether the first pending determination data is the first compressed data may be determined directly by the identification information attached to the first pending determination data during transmission, e.g., the user terminal corresponding to the second user may transmit a parameter used to indicate the data content thereof as the identification information when the first pending determination data is sent. Optionally, the determination may also be made by analyzing the data content of the first pending determination data. For example, the determination may be made by reading the header information of the data file of the first pending determination data, such as reading the first 3 bytes of the data file of the first pending determination data and determining whether the first 3 bytes are 504B03. If it is so, it is determined that the first pending determination data is a compressed file, i.e., it is the first compressed data.

Optionally, if the first determination result is no, the first pending determination data may be directly saved, since it is the data file whose data facade is displayed at the moment, and it is not the case that the data facade has been modified.

It is evident that, by means of the present optional embodiment, it is capable of determining whether the obtained data is compressed and modified composite photo data, and decompressing and saving the data if it is, thereby enabling the entire process of data transmission to be completed, and the decompressed and saved data may be used for further data recovery or data processing.

As an optional embodiment, specific methods of the data-saving module in decompressing and saving the first pending determination data include:
decompressing the first pending determination data to obtain at least one piece of second photo data and at least one piece of second video data corresponding to the second photo data;
establishing a data correspondence between the second photo data and the second video data; and
saving the second photo data and the second video data, respectively.

Optionally, the data correspondence between the second photo data and the second video data may be achieved by establishing a data correspondence table or modifying the data facade of both. For more technical details of the second photo data and the second video data, reference may be made to the aforementioned description of the first photo data and the first video data, which is not repeated herein.

Optionally, the second photo data and the second video data are saved separately, and the second photo data may be saved in a storage space visible to the second user for receiving operational information directed by the second user, and the second video data may be saved in a storage space in a storage position different from that of the second photo data for categorizing them.

Optionally, the apparatus may further include a viewing module for performing following steps:
responding to a viewing request of the second user; identifying the second photo data;
transmitting the second photo data to a user terminal corresponding to the second user for viewing.

The aforementioned viewing module may respond to the viewing request of the second user, and send the second photo data saved in the storage space visible to the second user to the user terminal corresponding to the second user, so that the second user, either in the process of transmitting the first pending determination data (the first compressed data) or in the process of subsequently checking the saving of the data, simply views the uniform data with the photo data as the data facade, which allows the user to always maintain a subjective perception of the photo data, effectively reducing the user's misoperation and improving the user's experience.

It is evident that, by implementing the present optional embodiment, it is capable of decompressing the first pending determination data after determining that the first pending determination data is compressed composite photo data, and establishing a correspondence between the video data and the photo data, thereby allowing the entire process of data transmission to be completed, and the data after the correspondence is established allows for further data recovery or data processing operations to be performed more efficiently.

As an optional embodiment, the apparatus further includes a determining-transmitting module for performing following steps:
responding to a second transmission request triggered by a third user; obtaining at least one piece of third photo data and at least one piece of third video data corresponding to the third photo data;
determining whether the third user is qualified with a device for processing the composite photo data to obtain a second determination result; and
transmitting the third photo data and/or the third video data to a second terminal position corresponding to the second transmission request, according to the second determination result.

Optionally, the second transmission request may be triggered by the third user via a human-computer interaction device of the corresponding user terminal such as a keyboard, a mouse, or a touch screen, for example, it may be triggered via a touch screen of a cell phone terminal. Optionally, the second transmission request may indicate the second terminal position to be transmitted and a storage position of the composite photo data in the determining-transmitting module, so that the determining-transmitting module may obtain the composite photo data, i.e., at least one piece of third photo data and at least one piece of third video data corresponding to the third photo data, directly from the storage position. For more technical details of the third photo data and the third video data, reference may be made to the aforementioned description of the first photo data and the first video data, which is not repeated herein.

Optionally, determining whether the third user is qualified with an equipment for processing the composite photo data may include:
obtaining terminal device information of a user terminal corresponding to the third user;
determining whether the third user is qualified with a device for processing the composite photo data according to the terminal device information.

The terminal device information includes at least one of installed software information, performance information, and historical data processing records of the user terminal. Optionally, determining whether a software that processes composite photo data is installed in the user terminal according to the installed software information of the user terminal, and confirming that the third user is qualified with a device for processing the composite photo data, if a determination result is yes. Optionally, determining whether the performance information of the user terminal is better than a preset performance threshold, and confirming that the third user is qualified with a device for processing the composite photo data, if a determination result is yes. Optionally, determining whether a record of processing composite photo data is present or whether a record of failing to process composite photo data is absent in the historical data processing record of the user terminal, and confirming that the third user is qualified with a device for processing the composite photo data, if a determination result is yes.

Optionally, the second terminal position corresponding to the second transmission request may be used to indicate a user terminal corresponding to the third user, thereby achieving inter-device data transmission, and it may also be used to indicate a device storage position in a device in which the determining-transmitting module is positioned, thereby achieving intra-device data transmission.

It is evident that, by implementing the present optional embodiment, it is capable of determining whether the user is qualified to process the composite photo data to identify the data transmission method, thereby allowing the data to be transmitted flexibly according to the performance of the user's device in a data transmission scenario, such as data recovery, and improving the user's experience.

As an optional embodiment, specific methods of the determining-transmitting module in transmitting the third photo data and/or the third video data to a second terminal position corresponding to the second transmission request, according to the second determination result include:
Compressing and processing the third photo data and the third video data to obtain second compressed data if the second determination result is yes, and transmitting the second compressed data to the second terminal position corresponding to the second transmission request.
transmitting the third photo data to the second terminal position if the second determination result is no.
in which the second compressed data has an identical data facade to that of the third photo data. Optionally, the steps of compressing and processing the third photo data and the third video data may refer to the aforementioned steps of compressing and processing the first photo data and the first video data, which are not repeated herein.

By this step, if the user is not qualified to process the composite photo data, the photo data is sent directly to the user for viewing, while if the user is qualified to do so, the composite photo data is compressed. The compressed composite photo data has an identical data facade to the third photo data. As the user generally only has perception recognition ability for the photo data in the composite photo data when photographing, this step enables the user to directly recognize that the second compressed data to be transmitted at the moment is the data corresponding to the third photo data, so that the user perceives which photo data is the compressed data currently transmitted during subsequent data transmission, which may not lead to misoperation due to incorrectly recognition of the data, and provides a good user experience.

By implementing the present optional embodiment, it allows data processing to be performed flexibly according to the user's device and, when the user is qualified to do so, the composite photo data may be compressed to modify the data facade to be identical to the photo data therein, and then the data may be transmitted, which allows the user to transmit the composite photo data in such a way that the user may always maintain a subjective perception of the photo data, effectively reducing the user's misoperation and improving the user's experience.

As an optional embodiment, the apparatus further includes a determining-saving module for performing following steps:
obtaining second pending determination data at the second terminal position;
determining whether the second pending determination data is the second compressed data to obtain a third determination result; and
decompressing and saving the second pending determination data if the third determination result is yes.

Specifically, the second pending determination data has an identical data facade to that of the second compressed data. Optionally, the second pending determination data may be sent by the server terminal to the second terminal position of the executing subject of the present embodiment. Optionally, the data facade of the second pending determination data may be a data facade of the photo data.

In the present optional embodiment, as the data facade of the second pending determination data is identical to that of the second compressed data, rendering it unclear to the determining-saving module whether the received data is compressed composite photo data or normal photo data, it is necessary to perform a determination action in order to identify a subsequent processing step. Optionally, the method of determining whether the second pending determination data is the second compressed data may refer to the aforementioned method of determining whether the first pending determination data is the first compressed data, which is not repeated herein.

Optionally, if the third determination result is no, the second pending determination data may be directly saved, since it is the data file whose data facade is displayed at the moment, and it is not the case that the data facade has been modified. Optionally, the manner of decompressing and saving the second pending determination data may refer to the aforementioned description of the method of decompressing and saving the first pending determination data, which is not repeated herein.

It is evident that, by implementing present the optional embodiment, it is capable of determining whether the obtained data is compressed and modified composite photo data, and decompressing and saving the data if it is, thereby enabling the entire process of data transmission to be completed, and the decompressed and saved data may be used for further data recovery or data processing.

### Embodiment 6

Disclosed in the present embodiment of the disclosure is a system for transmitting composite photo data, including a first terminal, a second terminal and an apparatus for transmitting composite photo data disclosed in the embodiment 5, in which the apparatus for transmitting composite photo data may achieve the transmission of composite photo data by means of the functional modules disclosed in the embodiment 5, so as to transmit the data to a first terminal position of the first terminal and/or a second terminal position of the second terminal.

### Embodiment 7

Please refer to Fig. 6, Fig. 6 is a structural diagram of an electronic device disclosed in the present embodiment of the disclosure. As shown in Fig. 6, the electronic device may include:
a memory 601, memorized with an executable code; and
a processor 602, coupled with the memory 601,
in which the processor 602 invokes the executable code memorized in the memory 601 to perform some or all steps in the method for transmitting composite photo data, disclosed in at least one of the Embodiments 1-4 of the present disclosure.

Specific technical details regarding the implementation of transmitting composite photo data when the computer program is executed by the electronic device as described above have been discussed in detail in the aforementioned methods and steps, which therefore are not repeated herein.

### Embodiment 8

Disclosed in the present embodiment of the disclosure is a computer memory medium including computer instructions, in which the computer instructions are invoked to perform some or all steps in the method for transmitting composite photo data, disclosed in at least one of the embodiments 1-4 of the present disclosure.

### Embodiment 9

Disclosed in the present embodiment of the disclosure is a computer program product, including computer program or instructions, in which the computer program or instructions is performed by a processor to implement some or all steps in the method for transmitting composite photo data, disclosed in at least one of the embodiments 1-4 of the present disclosure.

### Embodiment 10

Disclosed in the present embodiment of the disclosure is a user terminal, in which the user terminal is used to perform some or all steps in the method for transmitting composite photo data, disclosed in the embodiment 1 and/or embodiment 4 of the present disclosure.

### Embodiment 11

Disclosed in the present embodiment of the disclosure is a server, in which the server is used to perform some or all steps in the method for transmitting composite photo data, disclosed in the embodiment 2 and/or embodiment 3 of the present disclosure.

The foregoing describes specific embodiments of the present specification, and other embodiments still fall within the scope of the appended claims. In some cases, the actions or steps documented in the claims may be performed in a different order than in the embodiments and still achieve the desired results. In addition, the processes depicted in the accompanying drawings do not necessarily have to be followed in the particular order or consecutive order shown to achieve the desired results. In some implementations, multitasking and parallel processing are also possible or may be advantageous.

The various embodiments in the present specification are described in a progressive manner, it is sufficient to refer to each embodiment for the same and similar parts of each embodiment, and each embodiment focuses on the differences from the other embodiments. Particularly, regarding the apparatus, device, and computer-readable storage medium embodiments, since they are substantially similar to the method embodiments, the descriptions are relatively simple, and it is sufficient to refer to the part of the description of the method embodiments for relevance.

The apparatus, device, and computer-readable storage medium provided in the embodiments of the present specification correspond to the method, and therefore, the apparatus, device, and computer-readable storage medium also provide beneficial technical effects similar to those of the corresponding method. Since the beneficial technical effects of the method have already been described in detail above, the beneficial technical effects of the corresponding apparatus, device, and computer-readable storage medium will not be repeated herein.

In the 1990s, it became clear that improvements to technology could be distinguished as either hardware (e.g., improvements to circuit structures such as diodes, transistors, switches, etc.) or software (improvements to the method and process). However, as technology has evolved, many of today's improvements to the methods and processes are now considered to be direct improvements to the structure of the hardware circuits. Designers almost always obtain the appropriate hardware circuit structure by programming the improved method and process into the hardware circuit. Therefore, it is impossible to argue that an improvement of a method and process may not be implemented with a hardware entity module. For example, a Programmable Logic Device (PLD) (e.g., Field Programmable Gate Array (FPGA)) is an integrated circuit in which the logic function is identified by programming the device by the user. A digital system is programmed by designers themselves to be "integrated" into a PLD without requiring a chip manufacturer to design and produce a specialized integrated circuit chip. Moreover, nowadays, instead of producing integrated circuit chips manually, such programming is mostly achieved by using "logic compiler" software, which is similar to the software compiler used in program development and writing. To compile the previous original code should also be written in a specific programming language, which is called Hardware Description Language (HDL), and HDL is not only one but many types, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and RubyHardware Description Language (RHDL). The most commonly used are Very-High-Speed Integrated Circuit Hardware Description Language (VHDL) and Verilog. It should also be clear to those skilled in the art that hardware circuits implementing the logical method and process are readily available simply by slightly logic programming the method and process in one of the several hardware description languages described above and programming it into an integrated circuit.

The controller may be implemented in any suitable manner, for example, the controller may take the form of such as a microprocessor or processor and computer-readable media storing computer-readable program code (e.g., software or firmware) that may be executed by the (micro)processor, logic gates, switches, Application Specific Integrated Circuits (ASICs), programmable logic controllers, and embedded microcontrollers. Examples of controllers include, but are not limited to, the following microcontrollers: the ARC 625D, the Atmel AT91 SAM, the Microchip PIC 18F26K20, and the Silicone Labs C8051F320. Memory controllers may also be implemented as part of the control logic for the memory. It is also known to those skilled in the art that, besides implementing the controller in a manner of pure computer-readable program code, it is entirely possible to program the method and steps logically to allow the controller to perform the same function in the form of logic gates, switches, special integrated circuits, programmable logic controllers, and embedded microcontrollers. Therefore, such a controller may be considered as a hardware component, and the apparatus included therein for implementing various functions may also be considered as a structure within the hardware component. Alternatively, the apparatus for implementing various functions may be considered as a structure that may be both a software module for implementing the method and a structure within a hardware component.

The systems, apparatuses, modules, or units clarified in the above embodiments may specifically be implemented by a computer chip or entity, or by a product having a certain functionality. A typical implementation device is a computer. Specifically, the computer may, for example, be a personal computer, a laptop computer, a cell phone, a camera phone, a smart phone, a personal digital assistant, a media player, a navigation device, an e-mail device, a gaming console, a tablet computer, a wearable device, or a combination of any of these devices.

For the convenience of description, the above devices are described separately in terms of function into various units. Of course, it is feasible to implement the functions of the units in the same or more software and/or hardware when implementing the present specification.

It should be understood by those skilled in the art that embodiments of the present specification may be provided as methods, systems, or computer program products. Accordingly, the embodiments of the present specification may take the form of fully hardware embodiments, fully software embodiments, or embodiments combining software and hardware aspects. Further, embodiments of the present specification may take the form of a computer program product implemented on one or more computer-usable storage media (including, but not limited to, disk memory, CD-ROM, optical memory, and the like) that contain computer-usable program code therein.

The present specification is described with reference to flowcharts and/or block diagrams of methods, apparatus (systems), and computer program products according to embodiments of the present specification. It should be understood that each of the processes and/or blocks in a flowchart and/or block diagram, as well as the combination of processes and/or blocks in a flowchart and/or block diagram, may be implemented by computer program instructions. The computer program instructions may be provided to a processor of a general-purpose computer, a special purpose computer, an embedded processor, or other programmable data-processing device to produce a machine such that the instructions executed by the processor of the computer or other programmable data-processing device produce an apparatus for implementing the functions specified in one or more of the flows of the flowchart and/or one or more of the blocks of the block diagram.

These computer program instructions may also be stored in computer-readable memory that directs a computer or other programmable data-processing device to operate in a particular manner, such that the instructions stored in the computer-readable memory result in a product including an instruction apparatus that implements functions specified in one or more of the flows of the flowchart and/or one or more of the blocks of the block diagram.

These computer program instructions may also be loaded onto a computer or other programmable data-processing device such that a series of operational steps are performed on the computer or other programmable device to produce computer-implementable processing, such that the instructions executed on the computer or other programmable device provide for implementing functions specified in one or more of the flows of the flowchart and/or in one or more of the blocks of the block diagram.

In an exemplary configuration, the computer device includes one or more processors (CPUs), input/output interfaces, network interfaces, and memory.

Memory may include non-permanent memory in a computer readable medium, in the form of random-access memory (RAM) and/or memory, such as read-only memory (ROM) or flash random access memory (flash RAM). Memory is an example of a computer readable medium.

Computer-readable media including permanent, non-permanent, removable and non-removable media may be implemented by any method or technique for information storage. Information may be computer-readable instructions, data structures, modules of a program, or other data. Examples of storage media for computers include, but are not limited to, phase-change random access memory (PRAM), static random access memory (SRAM), dynamic random access memory (DRAM), other types of random access memory (RAM), read-only memory (ROM), electrically erasable programmable read-only memory (EEPROM), flash memory or other memory techniques, compact disc read-only memory (CD-ROM), digital versatile disc (DVD) or other optical storage, cassette tapes, tape-based disk storage, other magnetic storage devices or any other non-transfer media that may be used to store information that is accessible by a computer device. As defined herein, a computer-readable medium excludes transitory computer-readable media, such as modulated data signals and carriers.

It should also be noted that, the related terms such as "include", "comprise", or any other derivatives and conjugations thereof, are intended to cover non-exclusive inclusion. Thus, a process, method, goods, or apparatus including a series of elements includes not only those elements, but also other elements that are not explicitly listed, or that are inherent to such a process, method, goods, or apparatus. In the absence of further limitation, an element defined by the phrase "including a/an ..." does not exclude the existence of another identical element in the process, method, goods, or apparatus including the aforementioned element.

The present specification may be described in a general context of computer-executable instructions executed by a computer, such as a program module. In general, a program module includes such as a routine, program, object, component, and data structure that performs a particular task or implements a particular abstract data type. The present specification may also be practiced in distributed computing environments where tasks are performed by remote processing devices that are connected via a communication network. In a distributed computing environment, program modules may be positioned in a local and remote computer storage medium including a storage device.

The various embodiments in the present specification are described in a progressive manner, it is sufficient to refer to each embodiment for the same and similar parts of each embodiment, and each embodiment focuses on the differences from the other embodiments. In particular, for a system embodiment, since it is substantially similar to a method embodiment, the description is relatively simple, and it is sufficient to refer to the description of a part of the method embodiment for relevance.

Finally, it should be noted that the method, apparatus, system, device, storage medium, and program product for transmitting composite photo data disclosed in the embodiments of the present disclosure are only preferred embodiments of the present disclosure, and are only used to illustrate the technical solutions of the present disclosure, but not to limit them. Despite the detailed description of the disclosure with reference to the aforementioned embodiments, it should be understood, by those skilled in the art, that the technical solutions recorded in the aforementioned embodiments may still be modified, or equivalent substitutions for some of the technical features thereof may be made; which the essence of the corresponding technical solutions of these modifications or substitutions is without departing from the spirit and scope of the technical solutions of the various embodiments of the disclosure.

## Claims

1. A method for transmitting composite photo data, comprising:
responding to a first transmission request triggered by a first user; obtaining target composite photo data directed by the first transmission request, wherein the target composite photo data comprises at least one piece of first photo data and at least one piece of first video data corresponding to the first photo data;
compressing and processing the target composite photo data according to the first photo data to obtain first compressed data having an identical data facade to that of the first photo data; and
transmitting the first compressed data to a first terminal position corresponding to the first transmission request.

2. The method for transmitting composite photo data according to claim 1, wherein compressing and processing the target composite photo data according to the first photo data to obtain the first compressed data having an identical data facade to that of the first photo data comprises:
obtaining a first data title and a first data suffix of the first photo data;
compressing the target composite photo data to obtain the first compressed data;
identifying a data title of the first compressed data to be the first data title; and
identifying a data suffix of the first compressed data to be the first data suffix.

3. The method for transmitting composite photo data according to claim 1, further comprising:
obtaining first pending determination data transmitted by a second user at the first terminal position, the first pending determination data having an identical data facade to that of the first compressed data;
determining whether the first pending determination data is the first compressed data to obtain a first determination result; and
decompressing and saving the first pending determination data if the first determination result is yes.

4. The method for transmitting composite photo data according to claim 3, wherein determining whether the first pending determination data is the first compressed data comprises:
determining whether the first pending determination data is the first compressed data by means of identification information accompanying the first pending determination data during transmission; and/or,
determining whether the first pending determination data is the first compressed data by analyzing data content of the first pending determination data; and/or,
determining whether the first pending determination data is the first compressed data by reading data file header information of the first pending determination data.

5. The method for transmitting composite photo data according to claim 4, wherein decompressing and saving the first pending determination data comprises:
decompressing the first pending determination data to obtain at least one piece of second photo data and at least one piece of second video data corresponding to the second photo data;
establishing a data correspondence between the second photo data and the second video data; and
saving the second photo data and the second video data, respectively.

6. The method for transmitting composite photo data according to claim 5, further comprising:
responding to a viewing request of the second user; identifying the second photo data;
transmitting the second photo data to a user terminal corresponding to the second user for viewing.

7. The method for transmitting composite photo data according to claim 1, further comprising:
responding to a second transmission request triggered by a third user; obtaining at least one piece of third photo data and at least one piece of third video data corresponding to the third photo data;
determining whether the third user is qualified with a device for processing the composite photo data; obtaining a second determination result; and
transmitting the third photo data and/or the third video data to a second terminal position corresponding to the second transmission request, according to the second determination result.

8. The method for transmitting composite photo data according to claim 7, wherein determining whether the third user is qualified with device for processing the composite photo data comprises:
obtaining terminal device information of a user terminal corresponding to the third user;
determining whether the third user is qualified with a device for processing the composite photo data according to the terminal device information.

9. The method for transmitting composite photo data according to claim 8, wherein the terminal device information comprises at least one of installed software information, performance information, and historical data processing records of the user terminal; and/or,
determining whether the third user is qualified with a device for processing the composite photo data according to the terminal device information comprises:
determining whether a software that processes composite photo data is installed in the user terminal according to the installed software information of the user terminal, and confirming that the third user is qualified with a device for processing the composite photo data, if a determination result is yes; and/or,
determining whether the performance information of the user terminal is better than a preset performance threshold, and confirming that the third user is qualified with a device for processing the composite photo data, if a determination result is yes; and/or,
determining whether a record of processing composite photo data is present or whether a record of failing to process composite photo data is absent in the historical data processing record of the user terminal, and confirming that the third user is qualified with a device for processing the composite photo data, if a determination result is yes.

10. The method for transmitting composite photo data according to claim 7, wherein transmitting the third photo data and/or the third video data to a second terminal position corresponding to the second transmission request, according to the second determination result comprises:
compressing and processing the third photo data and the third video data to obtain second compressed data if the second determination result is yes, and transmitting the second compressed data to the second terminal position corresponding to the second transmission request, the second compressed data having an identical data facade to that of the third photo data; and
transmitting the third photo data to the second terminal position if the second determination result is no.

11. The method for transmitting composite photo data according to claim 10, further comprising:
obtaining second pending determination data at the second terminal position, the second pending determination data having an identical data facade to that of the second compressed data;
determining whether the second pending determination data is the second compressed data to obtain a third determination result; and
decompressing and saving the second pending determination data if the third determination result is yes.

12. The method for transmitting composite photo data according to claim 11, wherein determining whether the second pending determination data is the second compressed data comprises:
determining whether the second pending determination data is the second compressed data by means of identification information accompanying the second pending determination data during transmission; and/or,
determining whether the second pending determination data is the second compressed data by analyzing data content of the second pending determination data; and/or,
determining whether the second pending determination data is the second compressed data by reading data file header information of the second pending determination data.

13. The method for transmitting composite photo data according to claim 1, wherein the data facade comprises at least one of a data title, a data thumbnail, a data suffix, and a data identification.

14. The method for transmitting composite photo data according to claim 13, wherein the data title is a file name of a data file; and/or, the data thumbnail is a file icon of a data file or a thumbnail display image of a data file in a particular program.

15. The method for transmitting composite photo data according to claim 13, wherein the data suffix is used to indicate a suffix of a data file format; and/or, the data identification is an identification carried by data that identifies data content thereof.

16. An apparatus for transmitting composite photo data, comprising:
a data-obtaining module, used for responding to a first transmission request triggered by a first user; obtaining target composite photo data directed by the first transmission request, wherein the target composite photo data comprises at least one piece of first photo data and at least one piece of first video data corresponding to the first photo data;
a compressing-processing module, used for compressing and processing the target composite photo data according to the first photo data to obtain first compressed data having an identical data facade to that of the first photo data; and
a data-transmitting module, used for transmitting the first compressed data to a first terminal position corresponding to the first transmission request.

17. The method for transmitting composite photo data according to claim 16, wherein specific methods of the compressing-processing module in compressing and processing the target composite photo data according to the first photo data to obtain the first compressed data having an identical data facade to that of the first photo data comprise:
obtaining a first data title and a first data suffix of the first photo data;
compressing the target composite photo data to obtain the first compressed data;
identifying a data title of the first compressed data to be the first data title; and
identifying a data suffix of the first compressed data to be the first data suffix.

18. The method for transmitting composite photo data according to claim 16, wherein the apparatus further comprises a data-saving module for performing following steps:
obtaining first pending determination data transmitted by a second user at the first terminal position, the first pending determination data having an identical data facade to that of the first compressed data;
determining whether the first pending determination data is the first compressed data to obtain a first determination result; and
decompressing and saving the first pending determination data if the first determination result is yes.

19. The method for transmitting composite photo data according to claim 18, wherein specific methods of the data-saving module in determining whether the first pending determination data is the first compressed data comprise:
determining whether the first pending determination data is the first compressed data by means of the identification information accompanying the first pending determination data during transmission; and/or,
determining whether the first pending determination data is the first compressed data by analyzing the data content of the first pending determination data; and/or,
determining whether the first pending determination data is the first compressed data by reading the data file header information of the first pending determination data.

20. The method for transmitting composite photo data according to claim 19, wherein specific methods of the data-saving module in decompressing and saving the first pending determination data comprise:
decompressing the first pending determination data to obtain at least one piece of second photo data and at least one piece of second video data corresponding to the second photo data;
establishing a data correspondence between the second photo data and the second video data; and
saving the second photo data and the second video data, respectively.

21. The method for transmitting composite photo data according to claim 20, wherein the apparatus further comprises a viewing module for performing following steps:
responding to a viewing request of the second user; identifying the second photo data;
transmitting the second photo data to a user terminal corresponding to the second user for viewing.

22. The method for transmitting composite photo data according to claim 16, wherein the apparatus further comprises a determining-transmitting module for performing following steps:
responding to a second transmission request triggered by a third user; obtaining at least one piece of third photo data and at least one piece of third video data corresponding to the third photo data;
determining whether the third user is qualified with a device for processing the composite photo data to obtain a second determination result; and
transmitting the third photo data and/or the third video data to a second terminal position corresponding to the second transmission request, according to the second determination result.

23. The method for transmitting composite photo data according to claim 22, wherein specific methods of the determining-transmitting module in determining whether the third user is qualified with an equipment for processing the composite photo data comprise:
obtaining terminal device information of a user terminal corresponding to the third user;
determining whether the third user is qualified with a device for processing the composite photo data according to the terminal device information.

24. The method for transmitting composite photo data according to claim 23, wherein the terminal device information comprises at least one of installed software information, performance information, and historical data processing records of the user terminal; and/or,
specific methods of the determining-transmitting module in determining whether the third user is qualified with a device for processing the composite photo data according to the terminal device information comprise:
determining whether a software that processes composite photo data is installed in the user terminal according to the installed software information of the user terminal, and if the determination result is yes, confirming that the third user is qualified with a device for processing the composite photo data; and/or,
determining whether the performance information of the user terminal is better than a preset performance threshold, and confirming that the third user is qualified with a device for processing the composite photo data, if a determination result is yes; and/or,
determining whether a record of processing composite photo data is present or whether a record of failing to process composite photo data is absent in the historical data processing record of the user terminal, and confirming that the third user is qualified with a device for processing the composite photo data, if a determination result is yes.

25. The method for transmitting composite photo data according to claim 22, wherein specific methods of the determining-transmitting module in transmitting the third photo data and/or the third video data to a second terminal position corresponding to the second transmission request, according to the second determination result comprise:
compressing and processing the third photo data and the third video data to obtain second compressed data if the second determination result is yes, and transmitting the second compressed data to the second terminal position corresponding to the second transmission request, the second compressed data having an identical data facade to that of the third photo data; and
transmitting the third photo data to the second terminal position if the second determination result is no.

26. The method for transmitting composite photo data according to claim 25, wherein the apparatus further comprises a determining-saving module for performing following steps:
obtaining second pending determination data at the second terminal position, the second pending determination data having an identical data facade to that of the second compressed data;
determining whether the second pending determination data is the second compressed data to obtain a third determination result; and
decompressing and saving the second pending determination data if the third determination result is yes.

27. The method for transmitting composite photo data according to claim 26, wherein specific methods of the determining-saving module in determining whether the second pending determination data is the second compressed data comprise:
determining whether the second pending determination data is the second compressed data by means of identification information accompanying the second pending determination data during transmission;
and/or,
determining whether the second pending determination data is the second compressed data by analyzing data content of the second pending determination data;
and/or,
determining whether the second pending determination data is the second compressed data by reading data file header information of the second pending determination data.

28. A system for transmitting composite photo data, comprising a first terminal, a second terminal, and an apparatus for transmitting composite photo data as claimed in claim 16.

29. An electronic device, comprising:
a memory, memorized with an executable code; and
a processor, coupled with the memory,
wherein the processor invokes the executable code memorized in the memory to perform the method for transmitting composite photo data as claimed in any one of claims 1-15.

30. A computer memory medium, wherein the computer memory medium memorizes computer instructions, and the method for transmitting composite photo data as claimed in any one of claims 1-15 is performed when the computer instructions are invoked.

31. A computer program product, comprising computer program or instructions, wherein the method for transmitting composite photo data as claimed in any one of claims 1-15 is implemented when the computer program or instructions are performed by a processor.
